# EUROPEAN PATENT APPLICATION

(11) **EP 4 518 270 A1**
(43) Date of publication of application: **05.03.2025**
(21) Application number: 24192084.2
(22) Date of filing: 31.07.2024
(51) Int. Cl.: H04L 41/0816, H04L 41/342, H04L 41/0895

(54) **SEAMLESS TRANSITIONS BETWEEN IPV4 AND IPV6 UNDERLAY NETWORKS**

(30) Priority: 31.08.2023 US 202318241189
(71) Applicant: VMware LLC, Palo Alto, CA 94304 (US)
(72) Inventor: Mathew, Subin Cyriac, Palo Alto, 94304 (US); Raman, Chidambareswaran, Palo Alto, 94304 (US)
(74) Representative: Dilg, Haeusler, Schindelmann Patentanwaltsgesellschaft mbH

(57) **Abstract**

Some embodiments of the invention provide, for a software-defined datacenter (SDDC), a method of transitioning from an IPv4-based underlay network to an IPv6-based underlay network. The method is performed for each particular host computer (101, 102)of multiple host computers (101, 102) operating in the SDDC and configured with an IPv4 TEP (130, 135) (tunnel endpoint) for forwarding packets on the IPv4-based underlay network to other host computers (101, 102) in the SDDC. The method determines that an IPv6 TEP (230, 235) (tunnel endpoint) has been implemented on the particular host computer (101, 102). The method directs the particular host computer (101, 102) to switch from using the IPv4 TEP (130, 135) for forwarding packets to using the IPv6 TEP (230, 235) for forwarding packets to other host computers (101, 102) in the SDDC. The method provides a set of control plane information (150, 250, 350) to the particular host computer (101, 102) for use by the particular host computer (101, 102) to forward packets to other host computers (101, 102) in the SDDC.

## Description

### BACKGROUND

Today, customers traditionally use IPv4 for their TEPs (tunnel endpoints) that implement an IPv4 underlay network fabric for their datacenters, while the overlay network can be either an IPv4 or IPv6 overlay network. As customers begin to transition toward IPv6 TEPs, either due to IPv4 IP address exhaustion (i.e., a lack of available IPv4 addresses), IT policy issues that arise with IPv4, the general trend of moving physical fabric to an IPv6-based physical fabric, etc., issues arise due to the logical topologies/networks that have been created over the IPv4 underlay network. Currently, making this transition requires tearing down and recreating the logical topology, which can be very time-consuming for customers, disruptive to existing workloads, and lead to longer maintenance windows.

### BRIEF SUMMARY

Some embodiments of the invention provide, for a software-defined datacenter (SDDC), a method of transitioning from an IPv4-based underlay network to an IPv6-based underlay network. The method of some embodiments is performed by a control plane element for the SDDC, such as a software-defined network (SDN) controller, after a management plane (e.g., management server) for the SDDC has provisioned IPv6 TEPs (tunnel endpoints) to multiple host computers operating in the SDDC and previously configured with IPv4 TEPs that forward packets on the IPv4 underlay network to other host computers in the SDDC. Each host computer executes a set of virtualization software on which the TEPs are provisioned, in some embodiments, and at least one host computer is configured as an edge device and located at an edge of the SDDC.

The method is performed for each particular host computer in the multiple host computers operating in the SDDC. The method determines that an IPv6 TEP has been implemented on the particular host computer. The method then provides a set of control plane information to the particular host computer for use by the particular host computer to forward packets to the other host computers in the SDDC. The method directs the particular host computer to switch from using the IPv4 TEP for forwarding packets on the IPv4-based underlay network to the other host computers in the SDDC to using the IPv6 TEP for forwarding packets on the IPv6-based underlay network to the other host computers in the SDDC.

In some embodiments, the SDN controller determines that the IPv6 TEP has been implemented on the particular host computer after receiving from the particular host computer a set of TEP information associated with the IPv6 TEP implemented on the particular host computer. The set of TEP information, in some embodiments, includes a label that is shared by the IPv6 TEP and the IPv4 TEP and that uniquely identifies the IPv6 TEP and IPv4 TEP, as well as a MAC address - to - IPv6 TEP binding that specifies a MAC address of a particular machine executed by the particular host computer and an identifier of the IPv6 TEP. The particular machine is a virtual machine (VM), in some embodiments. In other embodiments, the particular machine is a container, pod, etc.

The SDN controller of some embodiments directs the particular host computer to switch from using the IPv4 TEP to using the IPv6 TEP by sending a control message to the particular host computer. In some embodiments, the control message changes a forwarding mode used by the particular host computer from IPv4 forwarding only to IPv6 forwarding only. Before sending the control message, the SDN controller of some embodiments first determines that an IPv6 TEP has been implemented on each of the multiple host computers to ensure that the IPv6 underlay network is available for forwarding packets to the other host computers (i.e., to ensure each other host computer is able to receive IPv6 packets sent by the particular host computer).

In some embodiments, each IPv4 TEP encapsulates egress packets sent by the particular host computer with an IPv4 outer header to forward egress packets on the IPv4 underlay network, and decapsulates ingress packets that are sent to the particular host computer on the IPv4 underlay network and that are encapsulated with an IPv4 outer header. Similarly, each IPv6 TEP, in some embodiments, encapsulates egress packets sent by the particular host computer with an IPv6 outer header to forward egress packets on the IPv6 underlay network, and decapsulates ingress packets that are sent to the particular host computer on the IPv6 underlay network and that are encapsulated with an IPv6 outer header. The IPv4 outer headers and the IPv6 outer headers are IPv4 Geneve headers and IPv6 Geneve headers, respectively, according to some embodiments.

The SDN controller of some embodiments sends the control messages to each particular host computer in a distributed manner. As such, for a period of time, in some embodiments, first and second subsets of the host computers use different forwarding modes, and thus different underlay networks, to send egress packets, while also receiving both IPv4 and IPv6 packets via the IPv4 and IPv6 underlay networks, respectively. In other words, regardless of the forwarding mode used by any of the host computers, each host computer is able to receive IPv4-encapsulated packets and IPv6 encapsulated packets.

In some embodiments, the other host computers to which the particular host computer forwards packets include other host computers that are connected to a same logical forwarding element as the particular host computer (i.e., other host computers in the same span as the particular host computer). The logical forwarding element, in some embodiments, is a logical switch implemented by a set of two or more software switches executing on two or more host computers. In other embodiments, the logical forwarding element is a logical router implemented by a set of two or more software routers executing on two or more host computers. In still other embodiments, the logical forwarding element is a combination logical router/logical switch implemented by a combination of software routers and software switches executing on two or more host computers.

The set of control plane information, in some embodiments, includes a set of span information identifying the other host computers connected to the same logical forwarding element as the particular host computer, and, for each host computer identified in the set of span information, a MAC-address-to-IPv6-TEP binding that specifies a MAC address of a particular machine executing on a set of virtualization software on the host computer and a corresponding TEP identifier associated with an IPv6 TEP implemented on the particular host computer. As a result, the control plane information of some embodiments provided to the host computers varies based on which host computers are connected to which logical switches. In some embodiments, the set of control plane information also includes, for each host computer identified in the set of span information, a MAC-address-to-IPv4-TEP binding that identifies the MAC address of a particular machine executing on a set of virtualization software on the host computer and a corresponding TEP identifier associated with an IPv4 TEP implemented on the particular host computer.

After all of the host computers have been provided with control information for use in forwarding packets to other host computers (e.g., other host computers connected to the same logical forwarding element), and thus all of the host computers have started using the IPv6 underlay network instead of the IPv4 underlay network (i.e., the SDDC has finished transitioning to the IPv6 underlay), the management plane (e.g., a management server) of some embodiments deprovisions the IPv4 TEPs to remove the IPv4 TEPs from the host computers, thereby removing the IPv4 underlay network from the SDDC. When the IPv4 TEPs, and IPv4 underlay network, have been removed, all of the host computers in the SDDC use only IPv6 TEPs to communicate with each other and are no longer able to receive any IPv4 packets, according to some embodiments. In other embodiments, the IPv4 TEPs and IPv4 underlay continue to be used alongside the IPv6 TEPs and IPv6 underlay network.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, the Detailed Description, the Drawings, and the Claims is needed. Moreover, the claimed subject matters are not to be limited by the illustrative details in the Summary, the Detailed Description, and the Drawings.

### BRIEF DESCRIPTION OF FIGURES

The novel features of the invention are set forth in the appended claims. However, for purposes of explanation, several embodiments of the invention are set forth in the following figures.
**Figure 1** conceptually illustrates a diagram of an SDN implementing an IPv4-based underlay network.
**Figure 2** conceptually illustrates a diagram in which the SDN of **Figure 1** implements an IPv6-based underlay network.
**Figure 3** conceptually illustrates a diagram of some embodiments in which IPv6 TEPs are provisioned to existing host computers of the SDN on which IPv4 TEPs have already been provisioned.
**Figure 4** illustrates a process performed by the SDN controller of some embodiments to transition an SDDC from an IPv4-based underlay network to an IPv6-based underlay network.
**Figure 5** conceptually illustrates a diagram of some embodiments in which different host computers are configured to use different forwarding modes to communicate.
**Figure 6** illustrates a process of some embodiments to change the forwarding mode utilized by host computers in the SDN from IPV4_ONLY to IPV6_ONLY.
**Figure 7** conceptually illustrates a diagram of some embodiments that shows the SDN after all host computers have converged to IPV6_ONLY forwarding mode.
**Figure 8** conceptually illustrates a diagram of the SDN of some embodiments after all IPv4 TEPs have been de-provisioned.
**Figure 9** conceptually illustrates a computer system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

In a Software Defined Datacenter (SDDC), overlay networks use the underlying physical network as a simple packet-forwarding backplane. When virtual machines (VMs) communicate with each other, each packet is encapsulated with the IP (Internet Protocol) addresses of the source and destination tunnel endpoints (TEPs). The VMs run on virtualization software (e.g., hypervisors) executing on host computers, and the TEPs provide IP connectivity between virtualization software.

In some embodiments, IPv4 TEPs are used in datacenters based on the IPv4 underlay network fabric of the datacenters. In order to enable customers to move from the IPv4 TEPs to IPv6 TEPs and vice versa, and from an IPv4 underlay network fabric to an IPv6 underlay network fabric and vice versa, some embodiments enable seamless transitions from IPv4 TEPs to IPv6 TEPs, and from IPv6 TEPs to IPv4 TEPs, with zero network outage for overlay workloads. For example, in some embodiments, a customer chooses to transition from IPv4 to IPv6 based on IT policies, a lack of available IPv4 addresses, and/or other IPv4-related issues.

As such, some embodiments of the invention provide, for a software-defined datacenter (SDDC), a method of transitioning from an IPv4-based underlay network to an IPv6-based underlay network. The method of some embodiments is performed by a control plane element for the SDDC, such as a software-defined network (SDN) controller, after a management plane (e.g., management server) for the SDDC has provisioned IPv6 TEPs (tunnel endpoints) to multiple host computers operating in the SDDC and previously configured with IPv4 TEPs that forward packets on the IPv4 underlay network to other host computers in the SDDC. Each host computer executes a set of virtualization software on which the TEPs are provisioned, in some embodiments, and at least one host computer is configured as an edge device and located at an edge of the SDDC.

The method is performed for each particular host computer in the multiple host computers operating in the SDDC. The method determines that an IPv6 TEP has been implemented on the particular host computer. The method then provides a set of control plane information to the particular host computer for use by the particular host computer to forward packets to the other host computers in the SDDC. The method directs the particular host computer to switch from using the IPv4 TEP for forwarding packets on the IPv4-based underlay network to the other host computers in the SDDC to using the IPv6 TEP for forwarding packets on the IPv6-based underlay network to the other host computers in the SDDC.

In some embodiments, the SDN controller determines that the IPv6 TEP has been implemented on the particular host computer after receiving from the particular host computer a set of TEP information associated with the IPv6 TEP implemented on the particular host computer. The set of TEP information, in some embodiments, includes a label that is shared by the IPv6 TEP and the IPv4 TEP and that uniquely identifies the IPv6 TEP and IPv4 TEP, as well as a MAC address - to - IPv6 TEP binding that specifies a MAC address of a particular machine executed by the particular host computer and an identifier of the IPv6 TEP. The particular machine is a virtual machine (VM), in some embodiments. In other embodiments, the particular machine is a container, pod, etc.

The SDN controller of some embodiments directs the particular host computer to switch from using the IPv4 TEP to using the IPv6 TEP by sending a control message to the particular host computer. In some embodiments, the control message changes a forwarding mode used by the particular host computer from IPv4 forwarding only to IPv6 forwarding only. Before sending the control message, the SDN controller of some embodiments first determines that an IPv6 TEP has been implemented on each of the multiple host computers to ensure that the IPv6 underlay network is available for forwarding packets to the other host computers (i.e., to ensure each other host computer is able to receive IPv6 packets sent by the particular host computer).

In some embodiments, each IPv4 TEP encapsulates egress packets sent by the particular host computer with an IPv4 outer header to forward egress packets on the IPv4 underlay network, and decapsulates ingress packets that are sent to the particular host computer on the IPv4 underlay network and that are encapsulated with an IPv4 outer header. Similarly, each IPv6 TEP, in some embodiments, encapsulates egress packets sent by the particular host computer with an IPv6 outer header to forward egress packets on the IPv6 underlay network, and decapsulates ingress packets that are sent to the particular host computer on the IPv6 underlay network and that are encapsulated with an IPv6 outer header. The IPv4 outer headers and the IPv6 outer headers are IPv4 Geneve headers and IPv6 Geneve headers, respectively, according to some embodiments.

The SDN controller of some embodiments sends the control messages to each particular host computer in a distributed manner. As such, for a period of time, in some embodiments, first and second subsets of the host computers use different forwarding modes, and thus different underlay networks, to send egress packets, while also receiving both IPv4 and IPv6 packets via the IPv4 and IPv6 underlay networks, respectively. In other words, regardless of the forwarding mode used by any of the host computers, each host computer is able to receive IPv4-encapsulated packets and IPv6 encapsulated packets.

In some embodiments, the other host computers to which the particular host computer forwards packets include other host computers that are connected to a same logical forwarding element as the particular host computer (i.e., other host computers in the same span as the particular host computer). The logical forwarding element, in some embodiments, is a logical switch implemented by a set of two or more software switches executing on two or more host computers. In other embodiments, the logical forwarding element is a logical router implemented by a set of two or more software routers executing on two or more host computers. In still other embodiments, the logical forwarding element is a combination logical router/logical switch implemented by a combination of software routers and software switches executing on two or more host computers.

The set of control plane information, in some embodiments, includes a set of span information identifying the other host computers connected to the same logical forwarding element as the particular host computer, and, for each host computer identified in the set of span information, a MAC-address-to-IPv6-TEP binding that specifies a MAC address of a particular machine executing on a set of virtualization software on the host computer and a corresponding TEP identifier associated with an IPv6 TEP implemented on the particular host computer. As a result, the control plane information of some embodiments provided to the host computers varies based on which host computers are connected to which logical switches. In some embodiments, the set of control plane information also includes, for each host computer identified in the set of span information, a MAC-address-to-IPv4-TEP binding that identifies the MAC address of a particular machine executing on a set of virtualization software on the host computer and a corresponding TEP identifier associated with an IPv4 TEP implemented on the particular host computer.

After all of the host computers have been provided with control information for use in forwarding packets to other host computers (e.g., other host computers connected to the same logical forwarding element), and thus all of the host computers have started using the IPv6 underlay network instead of the IPv4 underlay network (i.e., the SDDC has finished transitioning to the IPv6 underlay), the management plane (e.g., a management server) of some embodiments deprovisions the IPv4 TEPs to remove the IPv4 TEPs from the host computers, thereby removing the IPv4 underlay network from the SDDC. When the IPv4 TEPs, and IPv4 underlay network, have been removed, all of the host computers in the SDDC use only IPv6 TEPs to communicate with each other and are no longer able to receive any IPv4 packets, according to some embodiments. In other embodiments, the IPv4 TEPs and IPv4 underlay continue to be used alongside the IPv6 TEPs and IPv6 underlay network.

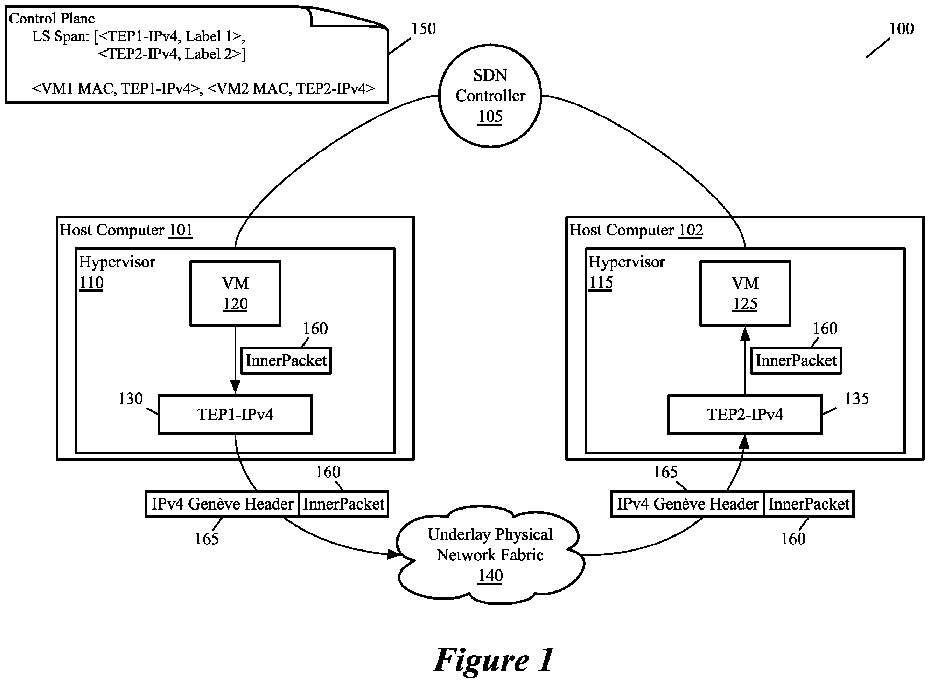

**Figure 1** conceptually illustrates a diagram 100 of an SDN implementing an IPv4-based underlay network. The diagram 100 represents an SDDC, or portion of an SDDC, in some embodiments. As shown, the diagram 100 includes an SDN controller 105, host computers 101 and 102, and an SDN-implemented underlay physical network fabric 140. The host computers 101 and 102 each executes a respective hypervisor 110 and 115 (e.g., virtualization software executing on the host computers). The hypervisor 110 on host computer 101 includes a VM 120 and an IPv4 TEP 130, while the hypervisor 115 on host computer 102 includes a VM 125 and an IPv4 TEP 135.

The SDN controller 105 of some embodiments is a cluster of SDN managers and controllers. In some embodiments, these managers and controllers are the NSX-T managers and controllers licensed by VMware, Inc. The SDN managers and controllers of some embodiments are directed by network administrators through, e.g., API calls, to deploy and/or modify NSX-T network constructs needed to implement a network state expressed by the API calls. For example, the IPv4 TEPs 130 and 135 are deployed by an SDN manager in response to an API call for deploying IPv4 TEPs in the SDDC represented by the diagram 100. The SDN controllers of some embodiments serve as the central control plane (CCP) for the SDDC represented by the diagram 100.

The IPv4 TEPs 130 and 135 learn the MAC to TEP bindings, which allow the IPv4 TEPs to properly address packets exchanged between the IPv4 TEPs 130 and 135, from the control plane information 150 that is provided to the hypervisors 110 and 115 on the host computers 101 and 102 by the SDN controller 105. As shown, the control plane information 150 identifies the span a including both of the IPv4 TEPs 130 and 135. Each span, in some embodiments, includes all transport nodes (e.g., host computers 101 and 102 executing hypervisors 110 and 115, respectively) that are connected to a common logical forwarding element, such as a logical switch implemented by a set of software switches executing on host computers (e.g., the host computers 101 and 102 and/or other host computers (not shown) in the SDDC), a logical router implemented by a set of software routers executing on host computers, or a combination logical switch/router implemented by a set of software routers and software switches executing on host computers.

In addition to the span information, the control plane information 150 includes MAC to TEP bindings that associated MAC addresses of the VMs 120 and 125 to the respective IPv4 TEPs implemented on the same hypervisors 110 and 115, respectively, as the VMs 120 and 125. Specifically, the MAC address for the VM 120 on the hypervisor 110 is bound to the IPv4 TEP 130 on the hypervisor 110, while the MAC address for the VM 125 on the hypervisor 115 is bound to the IPv4 TEP 135 on the hypervisor 115.

The underlay physical network fabric 140 in the diagram 100 is an IPv4 underlay physical network fabric implemented by the IPv4 TEPs 130 and 135. As such, the packets 160 exchanged between the hypervisors 110 and 115 on the host computers 101 and 102 are encapsulated with IPv4 Geneve headers 165. The Geneve headers 165 are compact tunnel headers that are encapsulated in UDP (user datagram protocol) over IPv4.

As shown, the packet 160 (i.e., inner packet 160) is first sent from the VM 120 running on the hypervisor 110 to the IPv4 TEP 130. The IPv4 TEP 130 then encapsulates the packet 160 with the IPv4 Geneve header 165 and forwards the packet on the underlay physical network fabric 140 toward the hypervisor 115 (e.g., based on the MAC to TEP bindings specified in the control plane information 150). The encapsulated packet is then received at the IPv4 TEP 135 running on the hypervisor 115. The IPv4 TEP 135 decapsulates the packet (i.e., removes the IPv4 Geneve header 165) and provides the decapsulated packet 160 to the VM 125 that runs on the hypervisor 115.

The underlay physical network fabric 140 of some embodiments is made up of wired or wireless connections, as well as one or more network forwarding elements, such as switches, routers, and physical access points that connect transport nodes (e.g., host computers 101 and 102 executing hypervisors 110 and 115) to each other and to other network elements (e.g., other host computers). In some embodiments, the underlay physical network fabric 140 includes a private network (e.g., an MPLS (multiprotocol label switching) network), or includes one or more public networks, such as the internet and/or one or more networks of one or more public clouds. In other embodiments, the underlay physical network fabric 140 includes a combination of public and private networks such as those mentioned above.

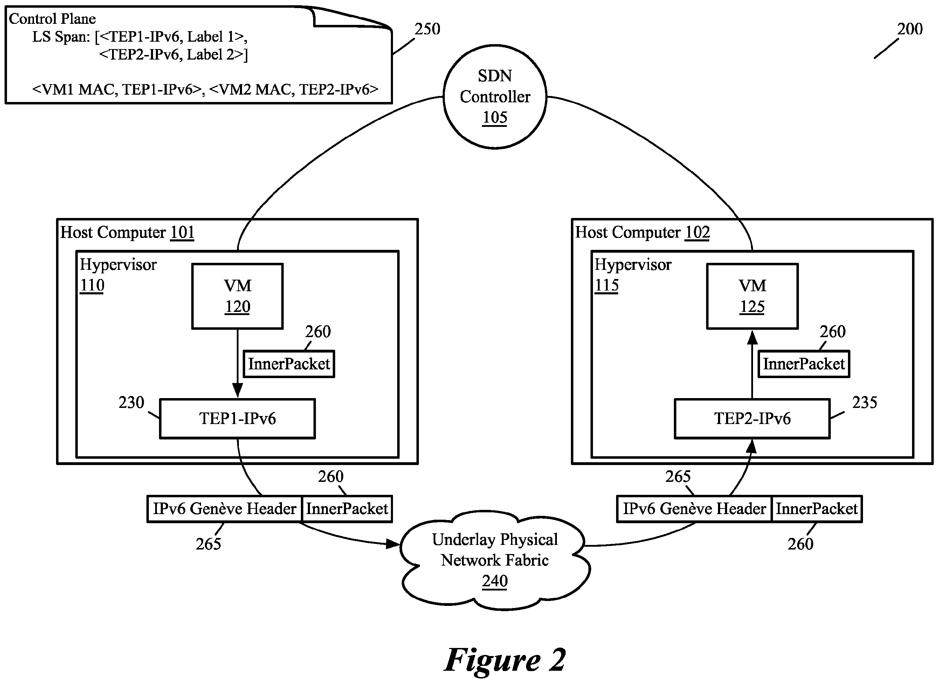

**Figure 2** conceptually illustrates a diagram 200 in which the SDN of **Figure 1** implements an IPv6-based underlay network. The diagram 200 includes the SDN controller 105, host computers 101 and 102, and the underlay physical network fabric 240. The host computer 101 executes the hypervisor 110 and the host computer 102 executes the hypervisor 115. The hypervisor 110 includes the VM 120 and an IPv6 TEP 230, while the hypervisor 115 includes the VM 125 and an IPv6 TEP 235. Accordingly, the underlay physical network fabric 240 in this example is an IPv6 underlay physical network fabric implemented by IPv6 TEPs 230 and 235.

The control plane information 250 is provided to the hypervisors 110 and 115 on the host computers 101 and 102 by the SDN controller 105. The control plane information 250 specifies a span that includes both of the IPv6 TEPs 230 and 235. Additionally, the control plane information 250 specifies the MAC to TEP bindings that bind the network addresses of the IPv6 TEPs 230 and 235 to the MAC addresses of the VMs 120 and 125, respectively. The IPv6 TEPs 230 and 235 use this control plane information to communicate with each other across the IPv6 underlay physical network fabric 240, such as to exchange packets like the packet 260.

Packet 260 (i.e., inner packet 260) originates from the VM 120 on the hypervisor 110, which forwards the packet 260 to the IPv6 TEP 230 on the hypervisor 110. Based on the IPv6 underlay physical network fabric 240, and the MAC to TEP bindings learned from the control plane information 250, the IPv6 TEP 230 encapsulates the packet 260 with an IPv6 Geneve header 265 and forwards the encapsulated packet on the IPv6 underlay physical network fabric 240 to the hypervisor 115 on host computer 102. The IPv6 TEP 235 on the hypervisor 115 receives the encapsulated packet, decapsulates the packet, and forwards the packet 260 to the VM 125, as shown.

While the diagrams 100 and 200 illustrate examples in which an SDN is implemented by an IPv4 underlay physical network fabric and an IPv6 underlay physical network fabric, respectively, embodiments of the invention described below provide examples in which the underlay physical network fabric is transitioned from an IPv4-based underlay network fabric to an IPv6-based underlay network fabric. In these embodiments, provisioning of TEPs is intentionally decoupled from the datapath in order to enable seamless transitions between IPv4 and IPv6 TEPs. The IPv6 TEPs are provisioned in a distributed manner (e.g., often taking multiple weeks over many maintenance windows for a large datacenter) to each individual transport node (e.g., each host computer executing a hypervisor), in some embodiments, while the datapath continues to use IPv4 for encapsulation (i.e., to prevent the datapath from breaking as the IPv6 TEPs are not provisioned simultaneously).

Once all of the IPv6 TEPs are provisioned, and all of the required control plane entities (e.g., the logical switch span, and MAC to TEP bindings) are present on all of the transport nodes (e.g., host computers executing hypervisors), the data plane is switched from an IPv4_ONLY forwarding mode to an IPv6_ONLY forwarding mode, according to some embodiments. In some embodiments, the IPv4 TEPs that implement the IPv4-based underlay network fabric are allowed to remain on the host computers to which they are provisioned, while in other embodiments, the IPv4 TEPs are deprovisioned once the data plane is switched to the IPv6 forwarding mode. As will be described below, the SDN controller of some embodiments sends control plane packets to the host computers to direct the host computers (e.g., the hypervisors executing on the host computers) to switch to the forwarding mode (e.g., IPv6_ONLY) specified by the control plane packets.

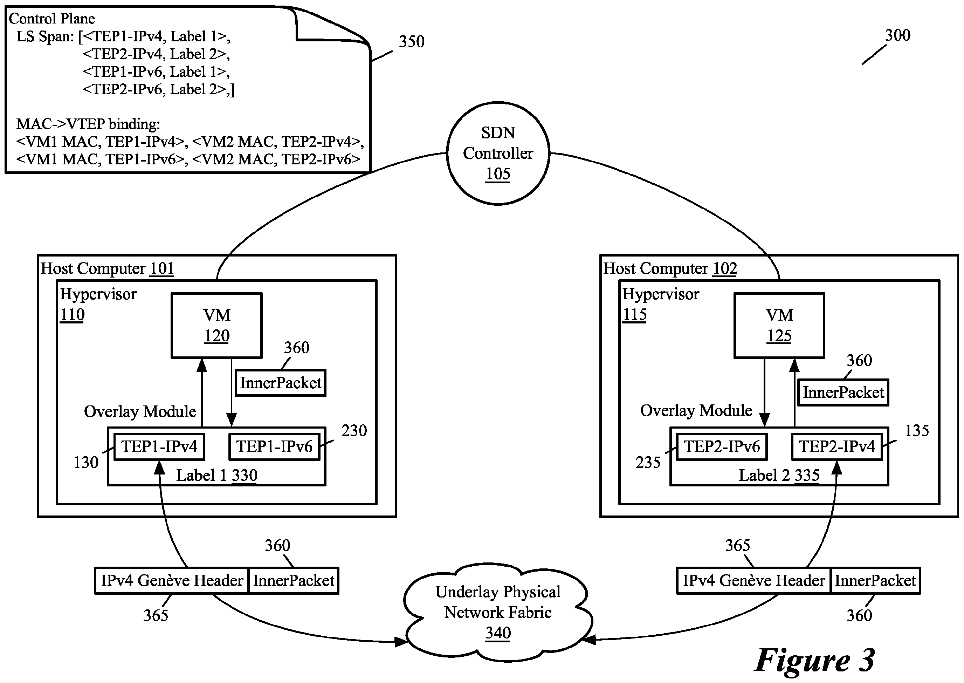

**Figure 3** conceptually illustrates a diagram 300 of some embodiments in which IPv6 TEPs are provisioned to existing host computers of the SDN on which IPv4 TEPs have already been provisioned. The diagram 300 includes the SDN controller 105, host computers 101 and 102, and an underlay physical network fabric 340. The host computers 101 and 102 execute respective hypervisors 110 and 115. The hypervisor 110 includes the VM 120 as well as a label 330 shared by IPv4 TEP 130 and IPv6 TEP 230. The hypervisor 115 includes the VM 125 as well as a label 335 shared by IPv4 TEP 135 and IPv6 TEP 235.

As the IPv6 TEPs 230 and 235 are being provisioned, the underlay physical network fabric 340 is an IPv4-based underlay physical network fabric 340 implemented by the IPv4 TEPs 130 and 135, and packets continue to be encapsulated with IPv4 Geneve headers and forwarded on the IPv4-based underlay physical network fabric 340. For example, on the host computer 101, the VM 120 forwards a packet 360 to the label 330 where the IPv4 TEP 130 encapsulates the packet 360 with an IPv4 Geneve header 365. The IPv4 TEP 130 then forwards the encapsulated packet on the IPv4 underlay physical network fabric 340 toward the host computer 102. The IPv4 TEP 135 of the hypervisor 115 on the host computer 102 receives the encapsulated packet and removes the IPv4 Geneve header 365 (i.e., decapsulates the packet) before forwarding the packet 360 to its destination VM 125.

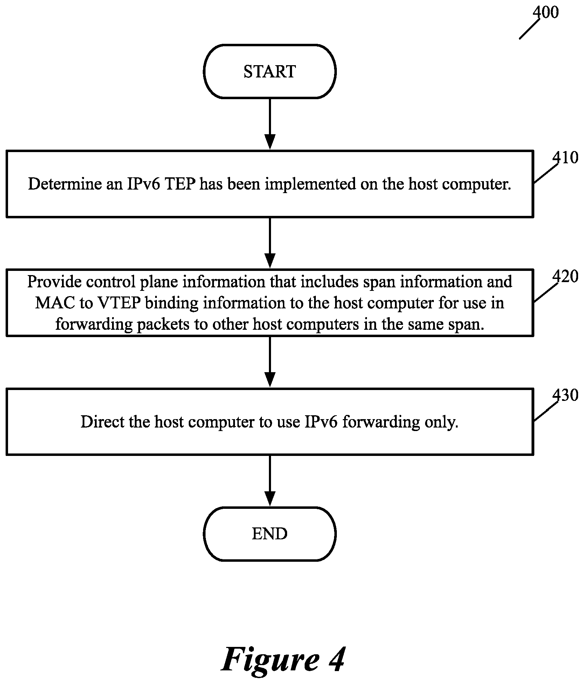

The diagram 300 will be further described below by reference to **Figure 4****,** which illustrates a process 400 performed by the SDN controller of some embodiments to transition an SDDC from an IPv4-based underlay network to an IPv6-based underlay network. The process 400 is performed in some embodiments for each transport node (e.g., each host computer executing a hypervisor to which the TEPs are provisioned) in the SDDC. In some embodiments, each step of the process 400 is performed for each transport node before moving to the next step in the process 400.

The process 400 starts when the SDN controller determines (at 410) that a IPv6 TEP has been implemented on the host computer. For instance, the IPv6 TEPs 230 and 235 are implemented on the hypervisors 110 and 115 of the host computers 101 and 102. The IPv6 TEPs are provisioned by the management plane (not shown), in some embodiments, such as a management server performing management plane operations. For example, as mentioned above, the SDN controller 105 of some embodiments is a set of management and control servers.

When the IPv6 TEPs 230 and 235 are realized on their respective hypervisors 110 and 115 (i.e., on the host computers 101 and 102 executing the hypervisors 110 and 115), the IPv6 TEPs 230 and 235 share the same label as the IPv4 TEPs 130 and 135. As illustrated, the IPv4 TEP 130 and IPv6 TEP 230 share the label 330, while the IPv4 TEP 135 and IPv6 TEP 235 share the label 335. Each label uniquely identifies each TEP (i.e., whether it is IPv4-based, IPv6-based, or both). The IPv6 TEP information is then reported to the SDN controller 105 (i.e., the control plane), including information such as the span and MAC to TEP binding information. As the IPv6 TEPs 230 and 235 are provisioned and realized, and the control plane is notified of the IPv6 TEPs, the data plane remains unimpacted and continues to operate normally, according to some embodiments.

The process 400 provides (at 420) control plane information that includes span information and MAC to TEP binding information to the host computer (e.g., the hypervisor executing on the host computer) for use in forwarding packets to other host computers in the same span. The control plane information, in some embodiments, is based on IPv4 TEP information and IPv6 TEP information received from the host computers, and allows each hsot computer (e.g., the TEPs provisioned to the hypervisors executing on the host computers) to properly address packets it sends to other host computers in the same span.

The SDN controller 105, for example, provides the control plane information 350 to the hypervisors 110 and 115 on the host computers 101 and 102 for use by the IPv4 TEPs 130 and 135 and the IPv6 TEPs 230 and 235. The control plane information 350, as shown, specifies the span as including IPv4 TEP 130 of label 330, IPv4 TEP 135 of label 335, IPv6 TEP 230 of label 330, and IPv6 TEP 235 of label 335. Additionally, the control information 350 specifies the MAC to TEP bindings for each VM/TEP pairing, including a binding of the MAC address for VM 120 to the IPv4 TEP 130, a binding of the MAC address for VM 125 to the IPv4 TEP 135, a binding of the MAC address for VM 120 to the IPv6 TEP 230, and a binding of the MAC address for VM 125 to the IPv6 TEP 235.

In some embodiments, the span and MAC to TEP bindings in the control plane information 350 are also referred to as the control plane entities. The logical switch (LS) span is used for replication when a VM sends a BUM (Broadcast, Unknown unicast, Multicast) packet, in some embodiments. The hypervisor of some embodiments encapsulates the inner packet with each of the TEPs in the LS span, and sends individual copies to each such TEP. In some embodiments, the MAC to TEP binding is used for encapsulating known unicast packets. For example, when the hypervisor wants to send a packet from the VM, it looks up the destination MAC in its MAC table, and if the MAC lookup succeeds (i.e., it finds that the MAC is behind a particular TEP), then the inner packet is encapsulated with that TEP information and sent to the destination hypervisor, according to some embodiments.

The process 400 directs (at 430) the host computer to use IPv6 forwarding only. In some embodiments, the SDN controller directs the host computer by sending a control message to the host computer to direct the host computer to change its forwarding mode from an IPv4 forwarding only mode to an IPv6 forwarding only mode. The SDN controller of some embodiments only directs the host computer to change its forwarding mode after the SDN controller has determined that IPv6 TEPs have been implemented on all of the host computers in the SDDC, and thus the underlay physical network fabric implemented for the SDDC includes both the IPv4 underlay network implemented by IPv4 TEPs and an IPv6 underlay network implemented by the IPv6 TEPs.

For instance, after the IPv6 TEPs 230 and 235 are provisioned to the hypervisors 110 and 115 executing on the host computers 101 and 102, respectively, and realized on the hypervisors 110 and 115, the underlay physical network fabric 340 includes both an IPv4 underlay physical network fabric implemented by the IPv4 TEPs 130 and 135, and an IPv6 underlay physical network fabric implemented by the IPv6 TEPs 230 and 235. As such, the SDN controller 105 of some embodiments then changes the forwarding mode utilized by the transport nodes from IPv4_ONLY to IPv6_ONLY. In some embodiments, the SDN controller changes the forwarding mode in a distributed fashion (i.e., one-by-one) such that the forwarding mode is changed from IPv4_ONLY to IPv6_ONLY for one hypervisor before it is changed for another hypervisor.

As described above, the SDN controller 105 of some embodiments is a set of SDN managers and controllers. In some embodiments, the SDN managers direct the SDN controllers to configure network elements in order to implement the network state expressed by API calls. For example, the SDN controllers of some embodiments change the forwarding mode for the hypervisors 110 and 115 on the host computers 101 and 102 after being directed to change the forwarding mode by the SDN managers in response to an API call to change the forwarding mode. Additional details regarding changing the forwarding mode will be further described below. Following 430, the process 400 ends.

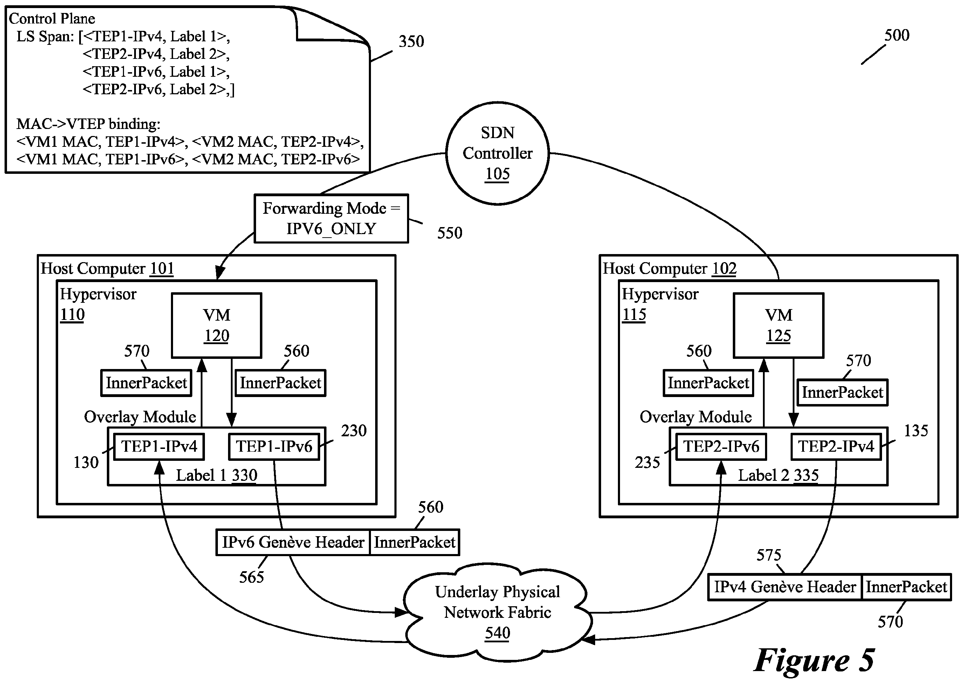

**Figure 5** conceptually illustrates a diagram 500 of some embodiments in which different transport nodes are configured to use different forwarding modes to communicate. The diagram 500 includes the SDN controller 105, host computers 101 and 102, and an underlay physical network fabric 540. The host computers 101 and 102 execute respective hypervisors 110 and 115. Like hypervisors 110 and 115 in the diagram 300, the hypervisors 110 and 115 in the diagram 500 still include the respective VMs 120 and 125, as well as the respective labels 330 and 335 shared by the respective IPv4 TEPs 130 and 135 and IPv6 TEPs 230 and 235.

Because the hypervisors 110 and 115 include respective IPv4 TEPs 130 and 135, as well as respective IPv6 TEPs 230 and 235, the underlay physical network fabric 540 includes both an IPv4 underlay network implemented by the IPv4 TEPs 130 and 135, as well as an IPv6 underlay network implemented by the IPv6 TEPs 230 and 235. Accordingly, the hypervisors 110 and 115 accept both IPv4 packets and IPv6 packets regardless of the transport zone forwarding mode configured for each hypervisor 110 and 115. For example, the SDN controller 105 changes the forwarding mode for the hypervisor 110 to IPV6_ONLY as indicated by the control packet 550, while the hypervisor 115 is still operating under the forwarding mode IPV4_ONLY. However, each hypervisor 110 and 115 is still able to receive packets of the other type.

The VM 120 forwards a packet 560, which is encapsulated with an IPv6 Geneve header 565 by the IPv6 TEP 230 based on the forwarding mode being changed to IPV6_ONLY. The IPv6 TEP 230 then forwards the encapsulated packet on the underlay physical network fabric 540 to the hypervisor 115. The IPv6 TEP 235 on the hypervisor 115 receives the encapsulated packet, removes the IPv6 Geneve header 565, and forwards the decapsulated packet 560 to the VM 125.

Additionally, the VM 125 forwards a packet 570, which is encapsulated with an IPv4 header 575 by the IPv4 TEP 135 on the hypervisor 115 because the SDN controller 105 has not yet changed the forwarding mode for the hypervisor 115. The IPv4 TEP 135 forwards the encapsulated packet to the hypervisor 110 on the underlay physical network fabric 540, where the encapsulated packet is received by the IPv4 TEP 130 on the hypervisor 110. The IPv4 TEP 130 removes the IPv4 Geneve header 575, and forwards the decapsulated packet 570 to the VM 120. As such, no datapath outages occur, in some embodiments, despite the time that it takes for all of the host computers (e.g., the host computers 101 and 102 executing the hypervisors 110 and 115) to completely converge to a particular forwarding mode (e.g., IPV6_ONLY forwarding mode).

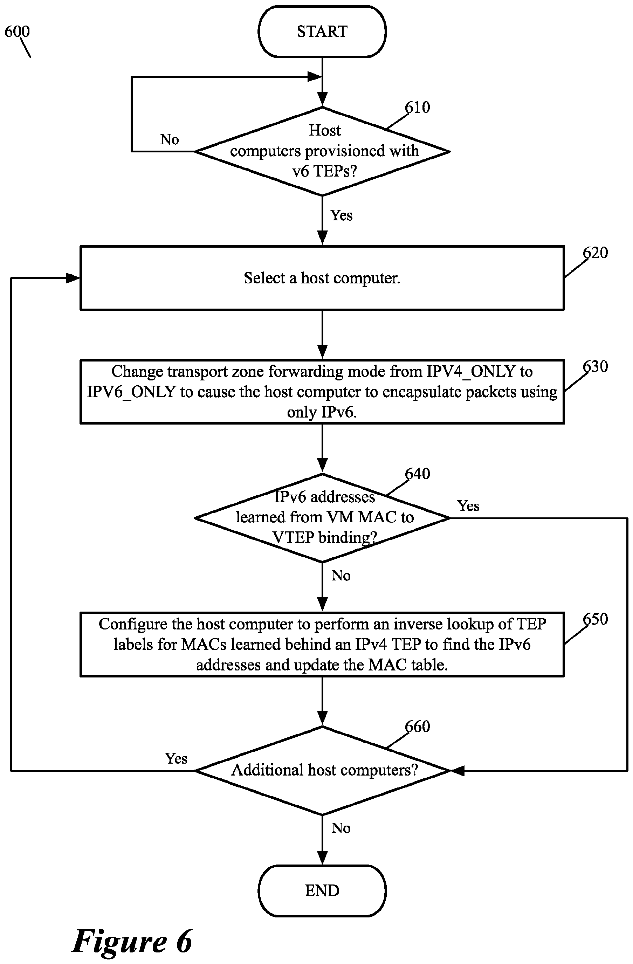

**Figure 6** illustrates a process 600 of some embodiments to change the forwarding mode utilized by host computers executing hypervisors in the SDN from IPV4_ONLY to IPV6_ONLY. The process 600 is performed in some embodiments by the control plane (e.g., an SDN controller). The process 600 will be described with references to **Figure 5****.**

The process 600 starts when the control plane determines (at 610) whether all of the host computers have been provisioned with IPv6 TEPs. In some embodiments, the control plane does not begin to change the forwarding mode for any host computers until all host computers have been provisioned with IPv6 TEPs. For example, in the diagram 500, the SDN controller 105 determines whether each of the hypervisors 110 and 115 on the host computers 101 and 102 have been provisioned with respective IPv6 TEPs. When the control plane determines that not all host computers have been provisioned with IPv6 TEPs, the process continues to perform the check until the process determines that all host computers have been provisioned with IPv6 TEPs.

When the process 600 determines that all host computers have been provisioned with IPv6 TEPs, the process 600 transitions to select (at 620) a host computer. The control plane of some embodiments changes the forwarding mode of each host computers in a distributed manner such that the control plane changes the forwarding mode for each host computers individually, one-by-one, and at any given time, a subset of host computers are configured to use IPv4 forwarding only while another subset is configured to use IPv6 forwarding only. In the diagram 500, for instance, the SDN controller 105 first selects the hypervisor 110 on the host computer 101.

The process 600 changes (at 630) the transport zone forwarding mode for the selected host computer from IPV4_ONLY to IPV6_ONLY to cause the selected host computer to encapsulate packets using only IPv6. As also described above, each host computer can receive IPv4 and IPv6 packets regardless of the forwarding mode configured for the host computer as long as the host computer includes TEPs for both IPv4 and IPv6. For example, the hypervisor 110 on host computer 101 sends an IPv6 encapsulated packet to the hypervisor 115 on host computer 102, and receives an IPv4 encapsulated packet from the hypervisor 115 on host computer 102, as illustrated in the diagram 500.

The forwarding mode determines how a host computer encapsulates the packets that it sends (i.e., as opposed to determining what type of packets the host computer can receive). As such, host computers configured with IPV6_ONLY forwarding mode encapsulate their packets using IPv6 TEPs that perform IPv6 encapsulation (and decapsulation), and host computers configured with IPV4_ONLY forwarding mode encapsulate their packets using IPv4 TEPs that perform IPv4 encapsulation (and decapsulation).

Like the provisioning of the IPv6 TEPs (or alternatively IPv4 TEPs), changing the forwarding mode of the host computers is a distributed operation and the changed forwarding mode is performed for and realized on each host computer, one-by-one. When the changed forwarding mode is realized on a host computer (e.g., host computers 101 and 102 that execute the hypervisors 110 and 115), the host computer switches from encapsulating the inner packets using IPv4 TEPs that perform IPv4 encapsulation to encapsulating the inner packets using the IPv6 TEPs that perform IPv6 encapsulation.

The process 600 determines (at 640) whether the selected host computer has learned IPv6 addresses from a VM MAC to TEP binding. For instance, the process of some embodiments determines whether the control plane has provided the host computer with an updated list of VM MAC to TEP bindings for the IPv6 TEPs (e.g., as is described above at step 420 of the process 400). When the control plane determines that the host computer has learned the IPv6 addresses from the VM MAC to TEP bindings, the process 600 transitions to determine (at 660) whether there are any additional host computers to select (i.e., whether the transport zone forwarding mode has yet to be changed for all of the host computers).

When the control plane determines that the host computer has not learned the IPv6 addresses from the VM MAC to TEP bindings, the process 600 transitions to configure (at 650) the host computer to perform an inverse lookup of TEP labels for MAC addresses learned behind an IPv4 TEP to find the IPv6 addresses and update the MAC table of the host computer. As described above, the IPv4 and IPv6 TEPs share a label, and as such, the IPv6 addresses can be identified based on the label shared by IPv4 and IPv6 TEPs. That is, the hypervisor maintains a table that identifies the association between each TEP label and the IP addresses. As such, once the forwarding mode is changed to IPv6_ONLY, when the datapath wants to encapsulate a packet, it looks up the VM MAC address. When the lookup returns, e.g., the TEP IPv4 address, then the TEP IPv4 address to TEP Label is found. From the TEP Label, the TEP IPv6 address is found, and this IPv6 address is used to do the encapsulation.

The process 600 then determines (at 660) whether there are any additional host computers to select (i.e., whether the transport zone forwarding mode has yet to be changed for all of the host computers). When there are additional host computers for which the forwarding mode still needs to be changed, the process 600 returns to step 620 to select a host computer. Otherwise, when the process 600 determines that all host computers have been changed to IPV6_ONLY forwarding mode, the process 600 ends.

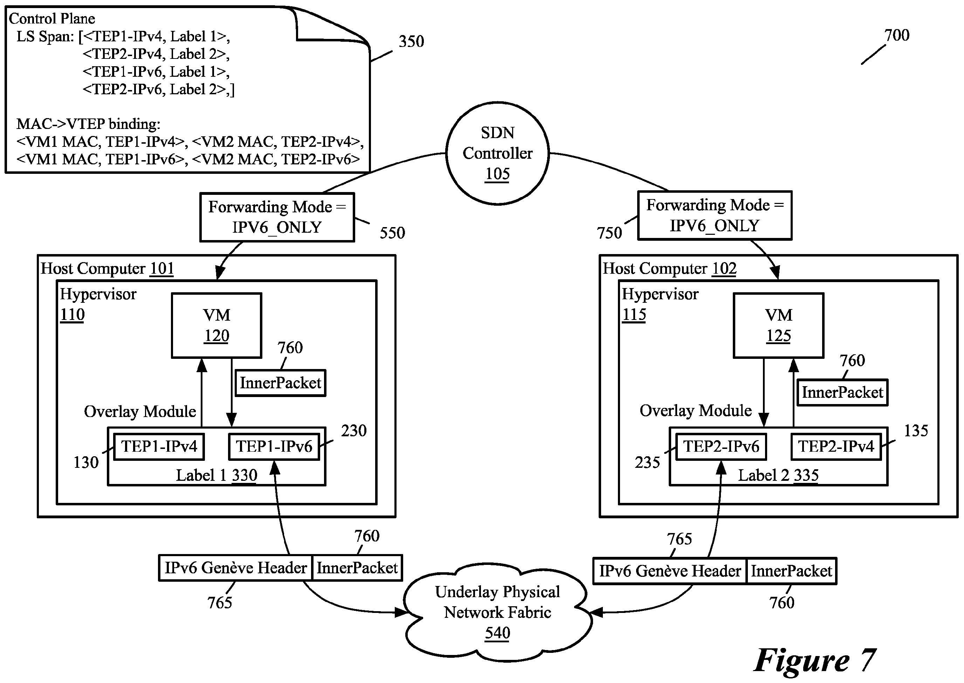

**Figure 7** conceptually illustrates a diagram 700 of some embodiments that shows the SDN after all host computers have converged to IPV6_ONLY forwarding mode. As shown, the SDN controller 105 sends a control message 750 to the hypervisor 115 on host computer 102 to change the forwarding mode used by the hypervisor 115 to IPV6_ONLY forwarding mode. As such, both the hypervisor 110 on host computer 101 and hypervisor 115 on host computer 102 use only their IPv6 TEPs 230 and 235, respectively, to sends packets to one another.

For instance, the VM 120 forwards a packet 760, which is encapsulated with an IPv6 Geneve header 765 by the IPv6 TEP 230. The IPv6 TEP 230 forwards the encapsulated packet on the underlay physical network fabric 540 toward the hypervisor 115. The IPv6 TEP 235 on the hypervisor 115 receives the encapsulated packet, decapsulates it, and forwards the decapsulated packet 760 to the VM 125, as shown.

In some embodiments, after all of the host computers have been provisioned with IPv6 TEPs and changed to IPV6_ONLY forwarding mode, the IPv4 TEPs are de-provisioned and all IPv4 control plane entities (i.e., the LS spans and MAC to TEP bindings) are removed from the host computers. For example, in some embodiments, a customer decides to completely transition to an IPv6 underlay physical network fabric, and thus there is no need for the IPv4 TEPs.

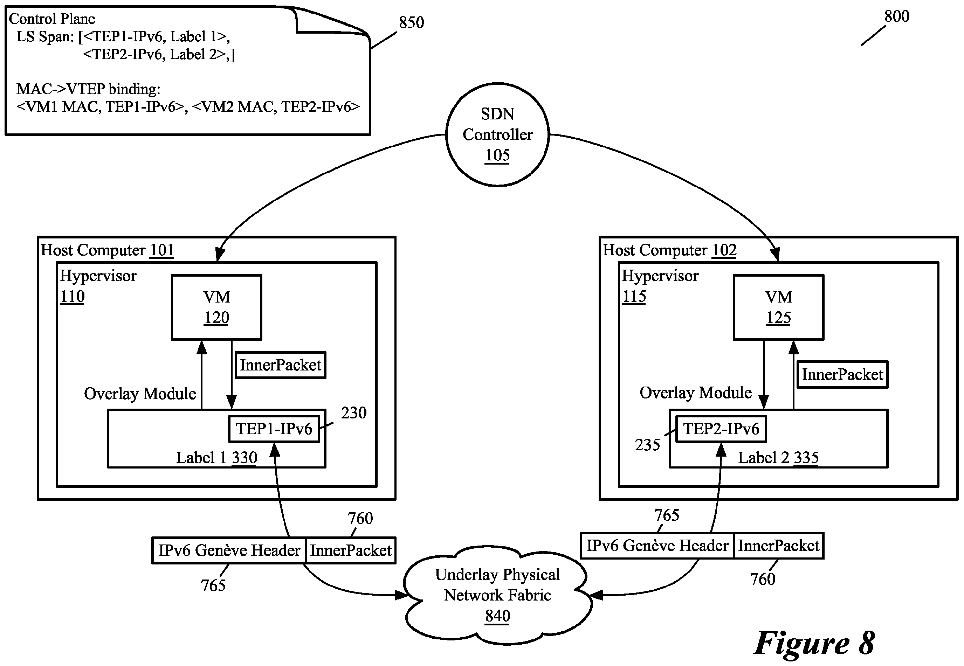

**Figure 8** conceptually illustrates a diagram 800 of the SDN of some embodiments after all IPv4 TEPs have been de-provisioned. As shown, the labels 330 and 335 no longer include the IPv4 TEPs, and accordingly, the hypervisors 110 and 115 can no longer receive any IPv4 encapsulated packets. As such, the underlay physical network fabric 840 is an IPv6 underlay network implemented by the IPv6 TEPs 230 and 235, and no longer includes an IPv4 underlay network. Additionally, the control plane information 850 is updated and only includes IPv6 TEP span information and IPv6 MAC to TEP bindings.

In some embodiments, a customer can re-provision the IPv4 TEPs and continue to use both IPv4 and IPv6, or switch back entirely to IPv4, if desired, without having any impact on the data plane. For example, if a customer observes any performance regressions with the IPv6 underlay network implemented by the IPv6 TEPs, the customer can seamlessly switch back to using IPv4 TEPs and the IPv4 underlay network implemented by the IPv4 TEPs (e.g., by refraining from deprovisioning the IPv4 TEPs and allowing them to remain in conjunction with the IPv6 TEPs, or by reprovisioning the IPv4 TEPs after they have been deprovisioned).

Many of the above-described features and applications are implemented as software processes that are specified as a set of instructions recorded on a computer-readable storage medium (also referred to as computer-readable medium). When these instructions are executed by one or more processing unit(s) (e.g., one or more processors, cores of processors, or other processing units), they cause the processing unit(s) to perform the actions indicated in the instructions. Examples of computer-readable media include, but are not limited to, CD-ROMs, flash drives, RAM chips, hard drives, EPROMs, etc. The computer-readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

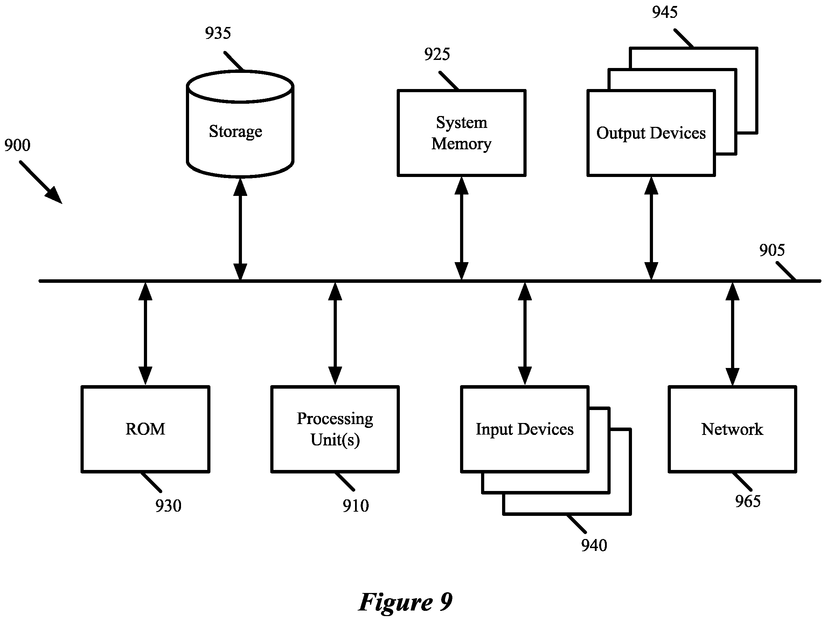

**Figure 9** conceptually illustrates a computer system 900 with which some embodiments of the invention are implemented. The computer system 900 can be used to implement any of the above-described hosts, controllers, gateway, and edge forwarding elements. As such, it can be used to execute any of the above described processes. This computer system 900 includes various types of non-transitory machine-readable media and interfaces for various other types of machine-readable media. Computer system 900 includes a bus 905, processing unit(s) 910, a system memory 925, a read-only memory 930, a permanent storage device 935, input devices 940, and output devices 945.

The bus 905 collectively represents all system, peripheral, and chipset buses that communicatively connect the numerous internal devices of the computer system 900. For instance, the bus 905 communicatively connects the processing unit(s) 910 with the read-only memory 930, the system memory 925, and the permanent storage device 935.

From these various memory units, the processing unit(s) 910 retrieve instructions to execute and data to process in order to execute the processes of the invention. The processing unit(s) 910 may be a single processor or a multi-core processor in different embodiments. The read-only-memory (ROM) 930 stores static data and instructions that are needed by the processing unit(s) 910 and other modules of the computer system 900. The permanent storage device 935, on the other hand, is a read-and-write memory device. This device 935 is a non-volatile memory unit that stores instructions and data even when the computer system 900 is off. Some embodiments of the invention use a mass-storage device (such as a magnetic or optical disk and its corresponding disk drive) as the permanent storage device 935.

Other embodiments use a removable storage device (such as a floppy disk, flash drive, etc.) as the permanent storage device. Like the permanent storage device 935, the system memory 925 is a read-and-write memory device. However, unlike storage device 935, the system memory 925 is a volatile read-and-write memory, such as random access memory. The system memory 925 stores some of the instructions and data that the processor needs at runtime. In some embodiments, the invention's processes are stored in the system memory 925, the permanent storage device 935, and/or the read-only memory 930. From these various memory units, the processing unit(s) 910 retrieve instructions to execute and data to process in order to execute the processes of some embodiments.

The bus 905 also connects to the input and output devices 940 and 945. The input devices 940 enable the user to communicate information and select commands to the computer system 900. The input devices 940 include alphanumeric keyboards and pointing devices (also called "cursor control devices"). The output devices 945 display images generated by the computer system 900. The output devices 945 include printers and display devices, such as cathode ray tubes (CRT) or liquid crystal displays (LCD). Some embodiments include devices such as touchscreens that function as both input and output devices 940 and 945.

Finally, as shown in **Figure 9****,** bus 905 also couples computer system 900 to a network 965 through a network adapter (not shown). In this manner, the computer 900 can be a part of a network of computers (such as a local area network ("LAN"), a wide area network ("WAN"), or an Intranet), or a network of networks (such as the Internet). Any or all components of computer system 900 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application-specific integrated circuits (ASICs) or field-programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms "display" or "displaying" mean displaying on an electronic device. As used in this specification, the terms "computer-readable medium," "computer-readable media," and "machine-readable medium" are entirely restricted to tangible, physical objects that store information in a form that is readable by a computer. These terms exclude any wireless signals, wired download signals, and any other ephemeral or transitory signals.

While the invention has been described with reference to numerous specific details, one of ordinary skill in the art will recognize that the invention can be embodied in other specific forms without departing from the spirit of the invention. Thus, one of ordinary skill in the art would understand that the invention is not to be limited by the foregoing illustrative details, but rather is to be defined by the appended claims.

## Claims

1. For a software-defined datacenter, SDDC, a method of transitioning from an IPv4-based underlay network to an IPv6-based underlay network, the method comprising:
for each particular host computer (101, 102) in a plurality of host computers (101, 102) operating in the SDDC and configured with an IPv4 TEP, tunnel endpoint,(130, 135) for forwarding packets on the IPv4-based underlay network to other host computers (101, 102) in the SDDC:
determining that an IPv6 TEP (230, 235) has been implemented on the particular host computer (101, 102);
providing a set of control plane information (150, 250, 350) to the particular host computer (101, 102) for use by the particular host computer (101, 102) to forward packets to other host computers (101, 102) in the SDDC; and
directing the particular host computer (101, 102) to switch from using the IPv4 TEP (130, 135) for forwarding packets on the IPv4-based underlay network to the other host computers (101, 102) in the SDDC to using the IPv6 TEP (230, 235) for forwarding packets on the IPv6-based underlay network to the other host computers (101, 102) in the SDDC.

2. The method of claim 1, wherein determining that an IPv6 TEP (230, 235) has been implemented on the particular host computer (101, 102) comprises receiving, from the particular host computer (101, 102), a set of TEP information associated with the IPv6 TEP (230, 235) implemented on the particular host computer (101, 102).

3. The method of claim 2, wherein the set of TEP information comprises (i) a label (330, 335) that is shared by the IPv6 TEP (230, 235) and the IPv4 TEP (130, 135) and that uniquely identifies the IPv6 TEP (230, 235) and IPv4 TEP (130, 135) and (ii) a MAC address - to - IPv6 TEP (230, 235) binding comprising a MAC address of a particular machine executing in virtualization software on the particular host computer (101, 102) and an identifier of the IPv6 TEP (230, 235).

4. The method of claim 3, wherein the particular machine comprises a virtual machine VM, (120, 125).

5. The method of any of claims 1 to 4, wherein directing the particular host computer (101, 102) to switch from using the IPv4 TEP (130, 135) for forwarding packets on the IPv4-based underlay network to the other host computers (101, 102) in the SDDC to using the IPv6 TEP (230, 235) for forwarding packets on the IPv6-based underlay network to the other host computers (101, 102) in the SDDC comprises sending a control message to the particular host computer (101, 102) to change a forwarding mode used by the particular host computer (101, 102) from IPv4 forwarding only to IPv6 forwarding only.

6. The method of claim 5, wherein sending the control message to the particular host computer (101, 102) to change the forwarding mode used by the particular host computer (101, 102) further comprises determining that an IPv6 TEP (230, 235) has been implemented on each host computer (101, 102) in the plurality of host computers (101, 102), wherein after all of the IPv6 TEPs (230, 235) have been implemented, the plurality of host computer (101, 102) can use the IPv6-based underlay network that is implemented by the IPv6 TEPs (230, 235).

7. The method of claim 6, wherein:
the IPv4 TEP (130, 135) (i) encapsulates egress packets sent by the particular host computer (101, 102) with an IPv4 outer header to forward the egress packets on the IPv4-based underlay network and (ii) decapsulates ingress packets that are sent to the particular host computer (101, 102) on the IPv4-based underlay network and that are encapsulated with an IPv4 outer header; and
the IPv6 TEP (230, 235) (i) encapsulates egress packets sent by the particular host computer (101, 102) with an IPv6 outer header to forward egress packets on the IPv6-based underlay network, and (ii) decapsulates ingress packets that are sent to the particular host computer (101, 102) on the IPv6-based underlay network and that are encapsulated with an IPv6 outer header.

8. The method of claim 7, comprising at least one of the following features:
wherein the IPv4 outer header comprises an IPv4 Geneve header and the IPv6 outer header comprises an IPv6 Geneve header;
wherein the method is performed by a software-defined network, SDN, controller (105), wherein the SDN controller (105) sends control messages to each particular host computer (101, 102) in the plurality of host computers (101, 102) in a distributed manner, wherein for a particular duration of time:
a first subset of the plurality of host computers (101, 102) (i) forward egress IPv4-encapsulated packets using only the IPv4 TEPs (130, 135) of the first subset of host computers (101, 102) via the IPv4 underlay network, and (ii) receive ingress IPv4-encapsulated packets via the IPv4 underlay network at the IPv4 TEPs (130, 135) and ingress IPv6-encapsulated packets via the IPv6 underlay network at the IPv6 TEPs (230, 235) of the first subset of host computers (101, 102); and
a second subset of the plurality of host computers (101, 102) (i) forward egress IPv6-encapsulated packets using only the IPv6 TEPs (230, 235) of the second subset of host computers (101, 102) via the IPv6 underlay network, and (ii) receive ingress IPv4-encapsulated packets via the IPv4 underlay network at the IPv4 TEPs (130, 135) of the second subset of host computers (101, 102) and ingress IPv6-encapsulated packets via the IPv6 underlay network at the IPv6 TEPs (230, 235).

9. The method of any of claims 1 to 8, wherein the other host computers (101, 102) in the SDDC to which the particular host computer (101, 102) forwards packets comprise other host computers (101, 102) connected to a same logical forwarding element as the particular host computer (101, 102).

10. The method of claim 9, comprising at least one of the following features:
wherein the logical forwarding element comprises a logical switch implemented by a set of two or more software switches executing on two or more host computers (101, 102);
wherein the logical forwarding element comprises a logical router implemented by a set of two or more software routers executing on two or more host computers (101, 102);
wherein host computers (101, 102) connected to the same logical forwarding element comprise host computers (101, 102) in a same span.

11. The method of claim 9 or 10, wherein the set of control plane information (150, 250, 350) comprises (i) a set of span information identifying the other host computers (101, 102) connected to the same logical forwarding element as the particular host computer (101, 102), and (ii) for each host computer (101, 102) identified in the set of span information, a MAC-address-to-IPv6-TEP binding identifying a MAC address of a particular machine executing on a set of virtualization software on the host computer (101, 102) and a corresponding TEP identifier associated with an IPv6 TEP (230, 235) implemented on the particular host computer (101, 102).

12. The method of claim 11, wherein the set of control plane information (150, 250, 350) further comprises, for each host computer (101, 102) identified in the set of span information, a MAC-address-to-IPv4-TEP binding identifying the MAC address of the particular machine executing on a set of virtualization software on the host computer (101, 102) and a corresponding TEP identifier associated with an IPv4 TEP (130, 135) implemented on the particular host computer (101, 102).

13. The method of any of claims 1 to 12, wherein the IPv6 TEPs (230, 235) are provisioned to the plurality of host computers (101, 102) by a management server of the SDDC.

14. The method of claim 13, wherein the method is performed by a software-defined network, SDN, controller (105), wherein after the SDN controller (105) has directed each host computer (101, 102) in the plurality of host computers (101, 102) to switch from using the IPv4 TEPs (130, 135) to using the IPv6 TEPs (230, 235), the management server de-provisions the IPv4 (130, 135) TEPs implemented on the plurality of host computers (101, 102) to remove the IPv4 TEPs (130, 135) from the plurality of host computers (101, 102).

15. The method of claim 14, comprising at least one of the following features:
wherein removing the IPv4 TEPs (130, 135) from the plurality of host computers (101, 102) removes the IPv4 underlay network;
wherein each host computer (101, 102) in the plurality of host computers (101, 102) executes a set of virtualization software, wherein determining that the IPv6 TEP (230, 235) has been implemented on the particular host computer (101, 102) comprises determining that the IPv6 TEP (230, 235) is executing on the set of virtualization software;
wherein at least one host computer (101, 102) in the plurality of host computers (101, 102) is configured as an edge device and located at an edge of the SDDC.
